Europäisches Patentamt

(19) **European Patent Office**

**Office européen des brevets**

(11) Numéro de publication: **0 234 978**
**A1**

(12) # DEMANDE DE BREVET EUROPEEN

(21) Numéro de dépôt: **87400106.8**

(22) Date de dépôt: **16.01.87**

(51) Int. Cl.³: **B 65 G 47/14**
**B 41 F 17/20**

(30) Priorité: **27.01.86 FR 8601094**

(43) Date de publication de la demande:
**02.09.87 Bulletin 87/36**

(84) Etats contractants désignés:
**AT BE CH DE GB IT LI LU NL SE**

(71) Demandeur: **Cassou, Robert**
**Rue Clémenceau**
**F-61300 L'Aigle(FR)**

(71) Demandeur: **Cassou, Bertrand**
**Saint Symphorien des Bruyeres**
**F-61300 L'Aigle(FR)**

(71) Demandeur: **Cassou, Maurice**
**Rue Clémenceau**
**F-61300 L'Aigle(FR)**

(72) Inventeur: **Cassou, Robert**
**Rue Clémenceau**
**F-61300 L'Aigle(FR)**

(72) Inventeur: **Cassou, Bertrand**
**Saint Symphorien des Bruyeres**
**F-61300 L'Aigle(FR)**

(72) Inventeur: **Cassou, Maurice**
**Rue Clémenceau**
**F-61300 L'Aigle(FR)**

(74) Mandataire: **Rodhain, Claude et al,**
**30, rue La Boétie**
**F-75008 Paris(FR)**

(54) **Distributeur de paillettes cylindriques.**

(57) L'invention concerne un distributeur de paillettes destinées à être imprimées notamment par une machine
d'impression à jet d'encre à laquelle ledit distributeur est
associé.

Le distributeur est caractérisé en ce qu'il comprend une
trémie dans laquelle les paillettes (2) sont placées horizontalement, dont la base est formée d'une rampe (11) inclinée définissant, en association avec des moyens de guidage complémentaire (12,100), un couloir de distribution (13)
dans lequel les paillettes sont acheminées par gravité, un organe de séparation et de prélèvement unitaire (20) des paillettes, et des organes d'acheminement (30,40), de la paillette à
la tête imprimante (A) de la machine d'impression.

FIG.1

EP 0 234 978 A1

"Distributeur de paillettes cylindriques"

L'invention concerne un distributeur de paillettes cylindriques destiné à faire progresser en translation longitudinale et bout à bout des paillettes qui lui sont fournies disposées parallèlement et côte à côte.

Ce dispositif est particulièrement adapté à être associé à un appareillage d'impression par jet d'encre, appareillage servant par exemple à imprimer des inscriptions d'identification à la périphérie des paillettes.

En effet, les appareillages d'impression par jet d'encre nécessitent, pour imprimer des inscriptions sur des paillettes, une progression régulière, à vitesse constante, de ces paillettes, sans vibration, sur une trajectoire rectiligne, avec un temps de réitération déterminé par les conditions particulières de l'impression.

Dans le cas de la forme de réalisation décrite et représentée, les paillettes sont des tubes destinés au conditionnement de divers liquides biologiques et adaptés au stockage, à la conservation et aux nombreuses applications de ces liquides, en chlorure de polyvinyle rigide alimentaire d'aspect "cristal", mais l'invention n'est pas limitée à de telles paillettes; les paillettes dont il est question ici ont une longueur de 133 mm, et existent sous trois diamètres différents définissant respectivement des volumes de 0,25 cm³, 0,50 cm³ et 1,00 cm³. A une extrémité, les tubes comportent un bouchon composite poreux ayant la faculté de réaliser l'obturation automatique de cette extrémité au contact d'un liquide aqueux en se transformant en gel élastique étanche; l'autre extrémité est scellée après remplissage par divers procédé connus permettant d'obtenir un conditionnement rigoureusement étanche, infranchissable par la majorité des germes microbiens.

Le conditionnement de substances très variées dans ces paillettes, implique la nécessité de pouvoir vacilement identifier la substance contenue dans une paillette déterminée. On utilise par exemple à cette fin :

- soit un code de couleurs (par exemple à 21 teintes), la teinte des paillettes étant conférée par coloration dans la masse du chlorure de polyvinyle;

- soit encore une fois un code de couleurs, mais par marquage de traits de teintes différentes à la périphérie des paillettes;

- soit une impression cliché souple et transfert d'encre classique.

Or, récemment, est apparue une technique d'impression par projection d'encre présentant un grand intérêt pour ce type d'application du fait

- d'une qualité d'impression parfaite,

- d'un excellent accrochage sur le chlorure de polyvinyle.

- d'un séchage instantané

- d'une possibilité de programmer rapidement tout texte d'indentification,

- d'une possibilité d'incrémentation, de numérotation séquentielle, de comptage de lots, etc.

- d'une aptitude à une distribution avec arrêt automatique pour toute quantité présélectionnée de paillettes, avec réarmement automatique pour le cycle suivant,

- d'une grande rapidité d'impression, pouvant atteindre une vitesse de 250 caractères par seconde.

Cette technique de marquage sans contact avec le support supprime les contraintes du cliché et a pour avantage supplémentaire d'être compatible avec les encres flexographiques à séchage instantané spécifiques du chlorure de polyninyle.

Selon cette technique, l'encre est projetée sous pression à travers une buse qui a la capacité de diviser le jet d'encre en un filet de gouttes d'encre minuscules cassé par vibration ultrasonique.

Les gouttes passent au travers d'une électrode de charge et reçoivent une charge électrostatique variable. La valeur de cette charge détermine les positions des gouttes sur le support car elles passent ensuite au travers d'un champ à haute tension constant. Ce champ dévie latéralement chaque goutte d'encre d'une distance proportionnelle à la valeur de sa charge.

C'est le mouvement du support perpendiculaire au plan de déflexion qui forme les caractères. Les gouttes d'encre non déviées ne concourent pas à la formation des lettres. Elles sont projetées directement vers une gouttière qui récupère cette encre pour la recycler.

L'ensemble de ces mécanismes est regroupé dans une tête imprimante reliée par une conduite flexible à une unité de contrôle à microprocesseur.

L'invention a pour but de permettre la mise en oeuvre d'une technique d'impression à jet d'encre, évitant ainsi les inconvénients des techniques d'impression antérieures et présentant les avantages énumérés plus haut.

A cet effet, l'invention concerne un distributeur de paillettes destinées à être imprimées notamment par une machine d'impression à jet d'encre à laquelle ledit distributeur est associé, distributeur caractérisé en ce qu'il comprend une trémie dans laquelle les paillettes sont placées horizontalement, dont la base est formée d'une rampe inclinée définissant, en association avec des moyens de guidage complémentaire, un couloir de distribution dans lequel les paillettes sont acheminées par gravité, un organe de séparation et de prélèvement unitaire des paillettes, des organes d'acheminement de la paillette à la tête imprimante de la machine d'impression.

D'autres caractéristiques et avantages de l'invention ressortiront de la description qui va suivre concernant une forme de réalisation donnée à titre d'exemple non limitatif et représentée schématiquement sur les dessins ci-joints dans lesquels :

- la Fig.1 est une vue schématique partielle de côté d'un distributeur selon l'invention représenté ainsi qu'une paillette dans une première position dans laquelle la paillette n'est pas actionnée en translation longitudinale en direction de la tête imprimante d'un appareillage d'impression à jet d'encre,

- la Fig.2 est une vue schématique, dans la position de la figure 1, de quelques unes des pièces du distributeur et de la tête imprimante de l'appareillage d'impression, vues de face depuis l'emplacement de la trémie d'alimentation, celle-ci étant enlevée,

- la Fig.3 est une vue schématique de côté du même distributeur représenté ainsi qu'une paillette dans une seconde position dans laquelle la paillette est actionnée en translation longitudinale en face de la tête imprimante,

- la Fig.4 est une vue schématique dans la position de la figure 3, de quelques unes des pièces du distributeur et de la tête imprimante, vues de face depuis l'emplacement de la trémie d'alimentation, celle-ci étant enlevée.

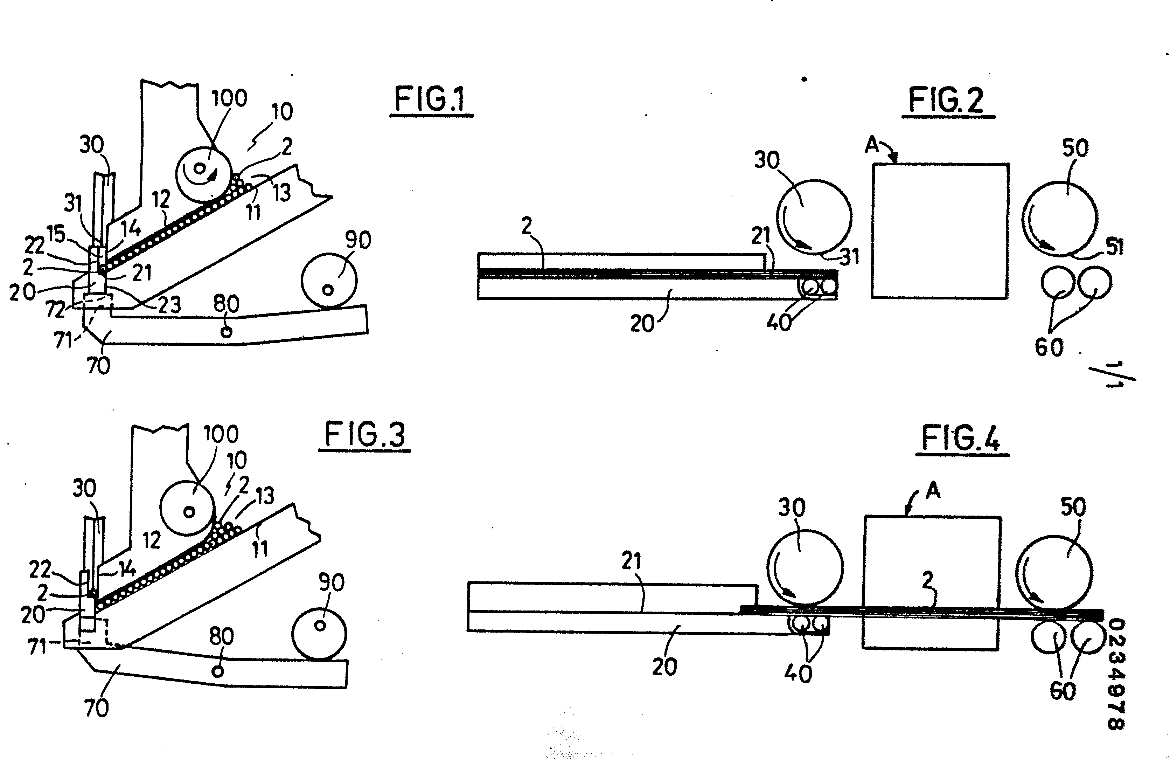

Le distributeur de paillettes cylindriques selon l'invention est destiné à être disposé à proximité immédiate d'un appareil d'impression muni d'une tête imprimante A (figures 2 et 4).

Ce distributeur comporte une trémie d'alimentation 10 pour le stockage horizontal des paillettes tubulaires cylindriques 2, ayant à sa base un fond formé d'une rampe 11 inclinée vers le bas en allant vers l'extérieur de la trémie et une paroi avant en forme de ski dont la spatule est recourbée vers l'extérieur de la trémie, la face inférieure 12 de cette spatule s'étendant parallèlement à la rampe 11 à une distance de celle-ci légèrement supérieure au diamètre des paillettes et constituant un moyen de guidage complémentaire du plan incliné. La rampe inclinée 11 et la face inférieure de la spatule déterminent un couloir de distribution 13 des paillettes vers l'avant du distributeur. Ce couloir de distribution 13 est incliné à 30 degrés par rapport à l'horizontale. Le couloir de distribution 13 des paillettes est limité à l'avant, c'est-à-dire dans sa partie basse, par une butée en L 20 formant tiroir de séparation et de prélèvement unitaire des paillettes, dont la base horizontale 21 présente une profondeur légèrement supérieure au diamètre des paillettes et dont la face verticale 22 est à une distance de l'extrémité libre de la spatule, présentant une face verticale 14 en regard, également légèrement supérieure au diamètre des paillettes; la butée 20 formant tiroir est montée mobile en translation verticale entre une position basse dans laquelle sa base horizontale prolonge la rampe inclinée 11 et une position haute dans laquelle sa base horizontale est positionnée au-dessus de la face inférieure 12 de la spatule de telle sorte que sa face arrière verticale 23 obture alors le couloir de distribution 13; la face verticale 22 de la butée 20 et la face verticale 14 de la paroi avant de la trémie déterminent ainsi un couloir vertical 15 de séparation et de prélèvement d'une seule paillette à la fois profongeant à l'avant le couloir de distribution 13 vers le haut.

De l'un des côtés des organes du distributeur, qui viennent d'être décrits et qui constituent des moyens d'acheminement des paillettes en translation transversale, sont disposés des premiers moyens d'acheminement des paillettes en translation longitudinale; ces premiers moyens d'acheminement en translation longitudinale comportent d'une part une poulie propulsive primaire 30 dont les faces s'étendent parallèlement au couloir vertical 15 et dont le plan médian parallèles aux faces est dans le prolongement du plan médian longitudinal du couloir vertical 15; la poulie propulsive primaire, mobile en rotation sous l'action de moyens moteurs non représentés est disposée à un niveau supérieur à la base horizontale 21 de la butée en L lorsque celle-ci est en position haute, de telle sorte que dans la partie inférieure de la poulie, les parois 31 de la gorge de celle-ci soient en contact avec la paillette reposant sur cette base horizontale 21; les premiers moyens d'acheminement comportent d'autre part des galets de contact primaires 40 montés ici fous et disposés en regard de la poulie 30 en dessous de celle-ci; ces galets sont disposés à une distance de la poulie 30 telle que leur périphérie supérieure vienne en contact avec la paillette à l'opposé de son contact avec la poulie; ils sont encastrés dans le profil même de l'épaulement de la butée 20 formant le tiroir muni d'un logement recevant la paillette. La tête imprimante A à jet d'encre est disposée à proximité des moyens d'acheminement des paillettes en translation longitudinale, sur un axe perpendiculaire à la direction d'acheminement des paillettes qui n'est autre que la direction de l'axe longitudinal de celles-ci lorsqu'elles sont disposées dans leur tiroir de séparation et de prélèvement unitaire; du côte de la tête imprimante A qui est opposé au côté comportant les premiers moyens d'acheminement des paillettes en translation longitudinale, sont disposés des seconds moyens d'acheminement en translation longitudinale comportant d'une part une poulie propulsive secondaire 50 dont les parois 51 de la gorge de la zone inférieure sont au même niveau que celles de la poulie propulsive primaire et dans le prolongement de celles-ci et d'autre part des galets de contact secondaires 60 dont la périphérie supérieure vient en contact avec la paillette à l'opposé du contact de celle-ci avec les parois 51 de la gorge de la poulie propulsive secondaire 50; comme pour les premiers moyens d'acheminement en translation longitudinale, la poulie propulsive secondaire 50 est actionnée par des moyens moteurs non représentés, tandis que les galets de contact secondaires 60 sont fous , ce train secondaire prolongeant, après la tête imprimante, les effets du train primaire. Le mouvement de translation verticale de la butée 20 formant tiroir est produit au moyen d'un mécanisme à levier 70 oscillant autour d'un axe horizontal fixe 80 approximativement central, l'une des extrémités du levier 70 étant maintenue en contact avec une came d'excentrique 90 excentrée verticalement et disposée au-dessus du levier oscillant 70, tandis que l'autre extrémité de ce levier, munie à sa partie supérieure d'un doigt 71 présentant une surface de contact bombée 72 à concavité dirigée vers le haut, est en contact avec la face inférieure de la butée 20 formant tiroir, de telle sorte que cette face inférieure de la butée 20 repose sur la surface de contact bombée 72.

Selon une caractéristique avantageuse de l'invention, à la base de la trémie, est prévu un autre moyen de guidage complémentaire de la rampe inclinée, sous la forme d'un rouleau excentrique 100 muni d'une came qui, en position basse, laisse, à l'entrée du couloir, un passage seulement très légèrement supérieur au diamètre d'une
paillette; ce rouleau excentrique 100 est actionné
en rotation à contre sens de la direction de progression des paillettes en translation transversale dans le
couloir de distribution 13, afin de réaliser, en les
repoussant vers le haut, l'alignement en nappe sur
une rangée suivant la rampe inclinée 11, des paillettes mal placées.

Ainsi, les paillettes étant disposées horizontalement dans la trémie 10, le rouleau excentrique 100 forme une nappe de paillettes sur une seule
rangée progressant par gravité en translation transversale vers le bas sur la rampe 11 dans le couloir
de distribution 13, la faible gravité apportée par
chaque paillette constituant par accumulation la force
de poussée appropriée, et le jeu laissé par le fait que
la hauteur du couloir est légèrement supérieure au
diamètre des paillettes  permettant l'acheminement
libre de celles-ci  jusqu'à la butée 20 formant tiroir.
Lorsque cette butée 20 est laissée en position basse
par le doigt 71, du fait que l'extrémité opposée du
levier oscillant 70 est alors laissée en position
haute par la came 90, une paillette est introduite
sur la base horizontale 21 de la butée; le point de
contact entre cette paillette et la suivante se trouvant à la moitié supérieure de la première, la seconde
n'a pas la possibilité de s'engager dessous. Lorsque
la butée 20 est actionnée en translation verticale
vers le haut par le doigt 71, l'extrémité opposée du
levier oscillant 70 étant repoussée vers le bas par
la came d'excentrique 90, la paillette est en même
temps soulevée, isolée des autres paillettes, et sa
partie périphérique supérieure vient au  contact des
parois 31 de la gorge de la poulie primaire 30. Comme
cette poulie primaire est animée d'un mouvement de
rotation continu dans le sens anti-horaire sur les dessins, la paillette est entraînée vers le train secondaire, soutenue par les galets de contact primaires 40 disposés à l'extrémité de la butée 20 côté distribution, qui, portés par cette butée 20, réalisent l'application de la paillette contre la poulie propulsive sans s'opposer au mouvement de translation longitudinal des paillettes. Quand la paillette passe devant la tête imprimante A, le jet d'encre imprime simultanément le texte sur cette paillette, lequel texte a été programmé à l'avance dans la mémoire de l'unité de contrôle de l'appareillage d'impression, et est réarmé automatiquement lors de la propulsion de chaque paillette. Lorsqu'une paillette, suivant toujours la même direction d'acheminement en translation longitudinale, arrive entre la poulie secondaire 50 et les galets secondaire 60, elle est reprise par ceux-ci (la poulie secondaire 50 tournant dans le même sens que la poulie primaire 30) en vue de son évacuation vers le poste suivant de l'installation, puis la paillette suivante est à son tour acheminée, et ainsi de suite, selon le cycle cinématique suivant :

- la roue primaire propulsive effectue quatre tours pour un tour de la came d'excentrique 90.

- quatre temps sont commandés ou maintenus pour un tour de la came, à savoir la commande de la montée de la butée 20 en position haute (sur 60°), le maintien de la butée en position haute pendant la propulsion de la paillette (sur 180°), la commande de la descente de la butée en position basse (sur 60°), et le maintien de la butée en position basse et l'introduction de la paillette suivante (sur 60°).

La durée d'application de la paillette contre la poulie propulsive est de 180°, soit un demi cycle (deux tours). Ainsi, une poulie propulsive ayant un diamètre utilie de 30 millimètres réalise sur deux tours un développement de 188 millimètres pour une paillette de 133 millimètres de long, ce qui laisse une marge de fonctionnement de 55 millimètres.

Bien entendu l'invention n'est pas limitée à la forme de réalisation ci-dessus décrite et représentée, et on pourra prévoir d'autres formes de réalisation sans sortir du cadre de cette invention.

REVENDICATIONS

1°. Distributeur de paillettes destinées à être imprimées notamment par une machine d'impression à jet d'encre à laquelle ledit distributeur est associé; distributeur caractérisé en ce qu'il comprend une trémie (10) dans laquelle les paillettes (2) sont placées horizontalement, dont la base est formée d'une rampe (11) inclinée définissant, en association avec des moyens de guidage complémentaire (12,100), un couloir de distribution (13) dans lequel les paillettes sont achiminées par gravité, un organe de séparation et de prélèvement unitaire (20) des paillettes constitué par une butée (20) formant tiroir déterminant avec une face verticale (14) de la paroi avant de la trémie (10) un couloir vertical (15) et animé d'un mouvement de translation vertical pour soulever la paillette prélevée, et des organes d'acheminement longitudinal (30,40,50,60) de la paillette à la tête imprimante (A) de la machine d'impression par contact avec cette paillette depuis son état soulevé.

2°. Distributeur selon la revendication 1, caractérisé en ce que les moyens de guidage sont constitués par la face inférieure (12) d'une pièce en forme de spatule de ski et par un rouleau excentrique (100).

3°. Distributeur selon l'une quelconque des revendications 1 et 2, caractérisé en ce que le couloir de distribution (13) a une hauteur légèrement supérieure au diamètre des paillettes.

4°. Distributeur selon l'une quelconque des revendications 1 à 3, caractérisé en ce que l'organe de séparation et de prélèvement constitué par une butée (20) formant tiroir déterminant avec une face verticale (14) de la paroi avant de la trémie (10) un couloir vertical (15), est actionné par un mécanisme à levier (70) oscillant et came d'excentrique (90).

5°. Distributeur de paillettes selon l'une quelconque des revendications 1 à 4, caractérisé en ce que l'organe de séparation et de prélèvement unitaire (20) des paillettes comporte au moins une paire de galets de contact (40) disposés à l'extrémité dudit organe (20) située à proximité de la tête imprimante (A), ces galets (40) coopérant avec une poulie primaire propulsive (30) d'acheminement de la paillette.

6°. Distribureur selon l'une quelconque des revendications de 1 à 5, caractérisé en ce que les organes d'acheminement de la paillette comprennent une paire de galets de contact (40,60) et une poulie propulsive (30,50) situées de part et d'autre de la tête imprimante (A).

7°. Distributeur selon les revendications 4 et 5, caractérisé en ce que la poulie primaire propulsive (30) est entraînée par des moyens moteurs de telle sorte que quatre tours de ladite poulie primaire propulsive correspondent à un tour de la came d'excentrique (90) et en ce qu'à un tour de ladite came correspondent quatre temps successifs, à savoir une commande de la montée de la butée (20) en position haute, un maintien de ladite butée en position haute avec propulsion de la paillette, une commande de la descente de ladite butée en position basse, et un maintien de la butée en position basse avec introduction de la paillette suivante.

8°. Distributeur selon l'une quelconque des revendications 1 à 7, caractérisé en ce que la tête imprimante (A) est disposée sur un axe perpendiculaire à la direction d'acheminement des paillettes.

9°. Distributeur selon l'une quelconque des revendications 1 à 8, caractérisé en ce que le texte à imprimer sur les paillettes est programmé à l'avance dans la mémoire d'une unité de contrôle de l'appareillage d'impression et est réarmé automatiquement lors de la propulsion de chaque paillette.

FIG.1

FIG.2

FIG.3

FIG.4

0234978

1/1

# 0234978
Numéro de la demande

## RAPPORT DE RECHERCHE EUROPEENNE

Office européen des brevets

EP 87 40 0106

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 251 503 (AZUMA SANGYO COMP. LTD)<br>* Page 4, lignes 11-37; figure 2 * | 1 | B 65 G 47/14<br>B 41 F 17/20 |
| A | | 3 | |
| | --- | | |
| Y | PATENT ABSTRACTS OF JAPAN, vol. 7, no. 98 (M-210)[1243], 26 avril 1983; & JP-A-58 020 452 (TONBO ENPITSU K.K.) 05.02.1983 | 1 | |
| | --- | | |
| A | Idem | 8 | |
| | --- | | |
| Y | US-A-3 039 384 (L.A. KINGSLEY)<br>* Revendications 1,3; figure * | 1 | |
| A | | 4 | DOMAINES TECHNIQUES RECHERCHES (Int. Cl.4)<br><br>B 41 F<br>B 65 G |
| | --- | | |
| A | DE-C- 738 828 (K. LANGE)<br>* Page 2, lignes 84-116; figures * | 2,3,5 | |
| | --- | | |
| A | GB-A-1 372 722 (THE BRITISH OXYGEN COMP. LTD)<br>* Page 2, lignes 78-112; figure * | 1,5,6 | |
| | ---     -/- | | |

Le présent rapport de recherche a été établi pour toutes les revendications

| Lieu de la recherche | Date d'achèvement de la recherche | Examinateur |
|---|---|---|
| LA HAYE | 08-05-1987 | VAN ROLLEGHEM F.M. |

Office européen
des brevets

**RAPPORT DE RECHERCHE EUROPEENNE**

EP 87 40 0106

| DOCUMENTS CONSIDERES COMME PERTINENTS | | Page 2 |
|---|---|---|

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 713 563 (C.O. DICKENSHEETS) <br> * Résumé; figure * <br><br> ----- | 1,2,3 | |
| | | | **DOMAINES TECHNIQUES RECHERCHES (Int. Cl.4)** |

Le présent rapport de recherche a été établi pour toutes les revendications

| Lieu de la recherche | Date d'achèvement de la recherche | Examinateur |
|---|---|---|
| LA HAYE | 08-05-1987 | VAN ROLLEGHEM F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82